# EUROPÄISCHE PATENTSCHRIFT

(11) **EP 0 758 063 B1**
(45) Veröffentlichungstag und Bekanntmachung des Hinweises auf die Patenterteilung: **20.09.2000**
(21) Anmeldenummer: 96890127.2
(22) Anmeldetag: 19.07.1996
(51) Int. Cl.: F16K 11/10

(54) **Startventil für pneumatische Anlagen**
Starting valve for pneumatic systems
Soupape de mise en marche pour systèmes pneumatiques

(30) Priorität: 04.08.1995 AT 132795
(43) Veröffentlichungstag der Anmeldung: 12.02.1997
(73) Patentinhaber: HYGRAMA AG, CH-6343 Rotkreuz (CH)
(72) Erfinder: Kühnelt, Herbert, Dipl.Ing., 1040 wien (AT)
(74) Vertreter: Pinter, Rudolf, Dipl.-Ing.

(56) Entgegenhaltungen:
- DE-A- 2 055 972
- DE-A- 2 654 035
- DE-A- 4 326 055
- DE-U- 7 013 745
- US-A- 2 129 938
- US-A- 4 561 464
- US-A- 5 337 788

## Beschreibung

Die Erfindung bezieht sich auf ein Startventil für pneumatische Anlagen, z.B. zur Betätigung der Stellzylinder von Werkzeugen und Werkzeugautomaten, das ein Ventilgehäuse mit je einem Eingang und einem Ausgang und mit diesen verbundenen Druckräumen aufweist, zwischen denen eine Durchgangsöffnung mit einem Ventilsitz vorgesehen ist, der durch ein Verschlußstück gesteuert ist, das in Schließrichtung durch eine Feder belastet und mit Hilfe einer Stelleinrichtung gegen die Kraft der Feder vom Ventilsitz abhebbar ist, wobei die Stelleinrichtung einen in einem Stellzylinder geführten Stellkolben aufweist, der mit einer auf das Verschlußstück wirkenden Ventilspindel verbunden und zum Abheben des Verschlußstückes vom Ventilsitz mit Druckmittel beaufschlagbar ist, wobei das Verschlußstück durch den Stellkolben über die Ventilspindel nur in Schließrichtung beeinflußbar, in Öffnungsrichtung aber unabhängig vom Stellkolben verschiebbar ist.

In der pneumatischen Schaltungs- und Steuerungstechnik sind bereits sogenannte Startventile bekannt, die auch als Sanftanlaufventile oder Druckaufbauventile bezeichnet werden und bewirken, daß beim Einschalten der Druckmittelversorgung der in Betrieb zu setzenden Anlage der Druckaufbau nicht plötzlich erfolgt, sondern langsam mit einer bestimmten Verzögerung. Damit wird sichergestellt, daß pneumatische Stellglieder der Anlage sich nur langsam in ihre Ausgangslage bewegen, falls sie sich, z.B. wegen eines Notstopps oder aufgrund von Service-Arbeiten, nicht in dieser befunden haben. Dadurch werden Gefahren für Mensch und Maschine, die auftreten können, wenn die Stellglieder durch einen plötzlichen Druckanstieg ungebremst in ihre Ausgangslage gepreßt oder gestoßen werden, verringert oder gänzlich vermieden.

Um den langsamen Druckaufbau zu erreichen, ist bei den bekannten Ausführungen (z.B. US-A-5 337 788) ein zweiter Strömungsweg für das Druckmedium vorgesehen, der als Bypass-Kanal mit einer fixen oder verstellbaren Drossel den Hauptströmungsweg, in den das eigentliche Startventil eingebaut ist, überbrückt. Das Druckmedium wird also zunächst bei geschlossenem Startventil über den Bypass-Kanal in Abhängigkeit vom Drosselquerschnitt desselben entsprechend langsam zugeführt, was einen langsamen Druckaufbau zur Folge hat. Erst beim Erreichen eines bestimmten Druckniveaus öffnet das Startventil den Hauptströmungsweg, worauf die Anlage voll mit Druckmedium versorgt wird.

Bei der Ausführung nach der genannten US-A-5 337 788 ist mit dem Startventil eine Schnellentlüftung kombiniert. Dabei muß für den Entlüftungsvorgang nicht nur das Hauptventil, sondern auch der Bypass-Kanal verschlossen werden, um die gewünschte Funktion zu ermöglichen. Dadurch ergibt sich eine verhältnismäßig aufwendige Konstruktion. Allerdings ist das Verschlußstück des Ventils durch einen Stellkolben und eine Ventilspindel nur in Schließrichtung beeinflußbar, in Öffnungsrichtung aber unabhängig vom Stellkolben verschiebbar.

Es ist ferner bekannt, mit dem Startventil ein 3/2-Wegeventil als General-Abschaltventil oder Notstopp-Einrichtung zu kombinieren. Dieses Abschaltventil ist bei den bekannten Ausführungen als eigenes Ventil ausgebildet, das entweder vom Startventil getrennt angeordnet oder mit diesem im gleichen Gehäuse zusammengefaßt ist. In beiden Fällen werden die beiden Funktionen, die Startfunktion und die Abschaltfunktion, über getrennte Ventileinrichtungen erzielt.

Die bekannten Ausführungen sind aufwendig und verhältnismäßig kompliziert. Sowohl für die Startfunktion als auch für das Abschalten oder die Notstopp-Einrichtung werden eigene Strömungswege mit eigenen Ventilen oder Drosselstellen verwendet, wodurch nicht nur die gesamte Anlage verteuert, sondern auch der Raumbedarf vergrößert und die Störanfälligkeit erhöht wird.

Aus der US-A-2 129 938 ist ein Steuerventil bekannt, bei dem das Verschlußstück über eine Ventilspindel mit dem Stellkolben fest verbunden ist. Der in einem Stellzylinder geführte Stellkolben wird über einen sogenannten Bypass-Kanal gesteuert, der vom Eingangsdruckraum des Steuerventils ausgeht und über ein elektromagnetisch betätigtes Nadelventil in den Stellzylinder führt. Das Öffnen und Schließen des Steuerventils erfolgt durch Ein- und Ausschalten der Stromzufuhr zum Magnetventil. Es handelt sich dabei um eine übliche Vorsteuerung mittels eines Magnetventils, um die Betätigung des Steuerventils auch bei höheren Drücken zu erleichtern. Eine Einrichtung zum langsamen Druckaufbau des gesteuerten Mediums ist dabei nicht vorgesehen.

Ein weitgehend ähnlich wirkendes Proportionaldurchflußventil ist aus der DE-A1-43 26 055 bekannt, dessen Ventilverschlußstück gleichfalls über eine Ventilspindel mit einem Betätigungskolben fest verbunden ist. Die Ventilspindel ist mit einem axialen Durchgangskanal versehen, der das Druckmittel für die Betätigung des Stellkolbens aus dem Eingangsdruckraum in den Stellzylinder zuführt und durch ein elektromagnetisch betätigtes Proportionalventil gesteuert ist. Bei dieser bekannten Ausführung kann ein langsamer Druckaufbau durch ein von außen gesteuertes elektrisches Signal erreicht werden. Dies erfordert aber aufwendige elektronische Vorkehrungen. Eine Entlüftungsfunktion ist dabei nicht vorgesehen.

Der Erfindung liegt die Aufgabe zugrunde, die bisher bekannten Startventile, die mit einer Einrichtung zum langsamen Druckaufbau und mit einer Schnellentlüftung versehen sind, zu vereinfachen und zu verbessern, insbesondere zusätzliche Strömungswege und eigene Ventile für die einzelnen Funktionen zu vermeiden, ohne die Funktion der Anlage selbst zu beeinträchtigen.

Die Erfindung geht von einem Startventil der eingangs angeführten und aus US-A-5 337 788 bekannten Bauart aus und löst die gestellte Aufgabe dadurch, daß am Ventilgehäuse ein Anschlag für den Stellkolben vorgesehen ist, der dessen Bewegung in Öffnungsrichtung des Verschlußstückes begrenzt, wobei der vom Druckmittel beaufschlagte wirksame Querschnitt des Stellkolbens größer ist als der wirksame Querschnitt des Ventilsitzes, daß das Verschlußstück auf seiner dem Ventilsitz abgewendeten Seite mit einem Steuerkolben versehen ist, der in einem von den Druckräumen des Ventilgehäuses getrennten, mit einem eigenen Steueranschluß ausgestatteten Steuerzylinder geführt und in diesem vom Druckmittel in Schließrichtung des Verschlußstückes beaufschlagbar ist, und daß der mit der Ventilspindel verbundene Stellkolben einen Druckentlastungssitz steuert, der vom Druckraum auf der Ausgangsseite des Gehäuses zu einem Entlüftungsanschluß führt und den Anschlag für den Stellkolben bildet.

Durch diese Ausbildung ist nur noch ein einziger Strömungsweg für den Druckaufbau in der pneumatischen Anlage erforderlich und wird zugleich auf einfache Weise eine Schnellentlüftung der Anlage ermöglicht, wobei alle für die Funktion erforderlichen Einrichtungen und Bestandteile im selben Gehäuse angeordnet sind. Die Druckmittelzufuhr zur pneumatischen Anlage, also der Druckmitteldurchgang durch das Startventil von der Eingangsseite zur Ausgangsseite, erfolgt bei der erfindungsgemäßen Ausführung über den einzigen Strömungsweg und wird durch ein einziges Ventil mit einem Ventilsitz und einem Verschlußstück gesteuert. Sobald der Stellkolben vom Druckmittel beaufschlagt wird, hebt er über die mit ihm verbundene Ventilspindel das Verschlußstück vom Ventilsitz um eine bestimmte, verhältnismäßig kleine Strecke ab und gibt so einen gedrosselten Durchgang durch das Startventil von der Eingangsseite zur Ausgangsseite frei. In der pneumatischen Anlage erfolgt dadurch ein langsamer Druckaufbau.

Wenn der unmittelbar auf das Verschlußstück wirkende Steuerkolben druckentlastet ist, geht der langsame Druckaufbau so lange weiter, bis die vom ausgangsseitigen Druck, der auf die gesamte Fläche des Verschlußstückes wirkt, auf dieses ausgeübte Kraft die vom eingangsseitigen Druck auf das Verschlußstück ausgeübte Kraft zuzüglich der Kraft der Schließfeder und allfälliger Strömungskräfte überwindet. Sobald dies der Fall ist, öffnet das Verschlußstück den Ventilsitz zur Gänze und das Startventil ermöglicht den vollen Druckaufbau in der pneumatischen Anlage.

Wenn hingegen der Steuerkolben vom Eingangsdruck beaufschlagt ist, kann der ausgangsseitige Druck die auf das Verschlußstück wirkenden Schließkräfte schon aufgrund der Federkraft nicht überwinden, selbst wenn der Ausgangsdruck gleich groß ist wie der Eingangsdruck. In diesem Fall öffnet das Startventil erst dann, wenn der Steuerkolben druckentlastet wird, was in aller Regel durch eine elektrische Rückmeldung erfolgt. Diese Möglichkeit erlaubt es, die volle Öffnung des Startventils und die volle Druckbeaufschlagung der pneumatischen Anlage zu verzögern, bis ein Quittiersignal anzeigt, daß sich alle Stellglieder der Anlage in ihrer Ausgangslage befinden und das Umsteuersignal gibt. Wenn dann der Steuerkolben druckentlastet wird, öffnet das Startventil zur Gänze und die pneumatische Anlage wird mit dem vollen Mediumsdruck beaufschlagt.

Der mit Druckmittel beaufschlagte Stellkolben schließt dabei den Druckentlastungssitz dicht ab und bleibt in dieser Stellung, solange er mit dem Druckmedium beaufschlagt ist. Sobald aber der Stellkolben druckentlastet wird, wird er durch den Druck des Mediums im ausgangsseitigen Druckraum des Startventils vom Druckentlastungssitz abgehoben, wobei er die Verbindung zu einem Druckentlastungsanschluß freigibt. Die Ausgangsseite des Startventils wird dadurch rasch druckentlastet und der Ventilsitz wird durch das Verschlußstück abgeschlossen. Dabei wird natürlich auch die angesteuerte pneumatische Anlage vom Mediumsdruck entlastet. Auf diese einfache Weise ist ein sogenannter Notstopp der pneumatischen Anlage jederzeit möglich.

Bei einer bevorzugten Ausführungsform der Erfindung ist die Ventilspindel mit dem Stellkolben axial verstellbar verbunden, vorzugsweise durch eine Schraubverbindung. Diese einfache Maßnahme erlaubt es, den Durchgangsquerschnitt des Startventils für den langsamen Druckaufbau auf einfache Weise genau einzustellen. Wenn der Stellkolben durch Druckbeaufschlagung gegen das Verschlußstück verschoben wird, legt er sich an seinen Endanschlag an und nimmt bei seiner Bewegung die auf das Verschlußstück wirkende Ventilspindel mit. Diese kann sodann so verstellt werden, daß das Verschlußstück um das gewünschte Ausmaß vom Ventilsitz abgehoben und der gewünschte Durchgangsquerschnitt durch das Startventil für den langsamen Druckaufbau erzielt wird. Durch bloßes Verstellen der Ventilspindel, also beispielsweise durch Verdrehen der Ventilspindel, wenn sie mit dem Verschlußstück oder mit dem Stellkolben verschraubt ist, kann also der Durchgangsquerschnitt durch das Startventil zum langsamen Druckaufbau beliebig eingestellt und verstellt werden.

Es ist im Rahmen der Erfindung zweckmäßig, den Steuerkolben mit dem Verschlußstück des Ventilsitzes einstückig auszubilden, etwa ähnlich einem Stufenkolben. Dadurch ergibt sich nicht nur ein einfacherer Aufbau des Startventils als Ganzes, sondern auch eine Erleichterung der Betätigung und eine Verringerung der Bestandteile, weil eine Kraftübertragung von einem getrennten Kolben auf das Verschlußstück wegfällt.

Erfindungsgemäß kann der druckbeaufschlagte wirksame Querschnitt des Steuerkolbens 30 bis 70 %, vorzugsweise etwa die Hälfte des Querschnittes des Ventilsitzes, betragen. Die Erfahrung hat gezeigt, daß in Abhängigkeit von der jeweiligen konstruktiven Ausbildung des Startventils bei einem langsamen Druckaufbau bis in den angeführten Druckbereich die Stellglieder der Anlage in aller Regel in ihre Ausgangslage zurückgekehrt sind, so daß dann der volle Druckaufbau ohne weitere Verzögerung eingeleitet werden kann, ohne daß Nachteile zu befürchten sind.

Die Steuerung des erfindungsgemäßen Startventils kann nach weiteren Merkmalen der Erfindung auf verschiedene Weise erfolgen. So hat sich eine Schaltungsanordnung bewährt, bei der zwei 3/2-Wegeventile vorgesehen sind, deren Steuereingänge gemäß einem weiteren Merkmal der Erfindung beide mit dem Eingang des Gehäuses und von deren Steuerausgängen jeweils einer des einen 3/2-Wegeventils mit dem Stellzylinder des die Ventilspindel betätigenden Stellkolbens und einer des anderen 3/2-Wegeventils mit dem Steuerzylinder des Steuerkolbens des Verschlußstücks über Leitungen verbunden sind, wobei durch Betätigen der beiden 3/2-Wegeventile der Stellzylinder und der Steuerzylinder wahlweise mit Druckmedium beaufschlagbar oder vom Druck entlastbar sind. Die Steuerung dieser Schaltungsanordnung kann wahlweise von Hand aus, aber auch selbsttätig durch elektrische oder pneumatische Hilfsmittel erfolgen. Sie bietet jedenfalls die Möglichkeit, sowohl den Stellkolben als auch den Steuerkolben wahlweise und unabhängig voneinander mit Druckmittel zu beaufschlagen und zu entlasten. So kann beispielsweise als Startsignal gleichzeitig der Stellkolben und der Steuerkolben druckbeaufschlagt werden. Der langsame Druckaufbau geht dann normal vor sich. Das Verschlußstück kann aber erst dann den Ventilsitz voll öffnen, wenn der Steuerkolben druckentlastet wird.

Bei einer weiteren Schaltungsanordnung mit einem 5/2-Wegeventil ist erfindungsgemäß der Steuereingang des 5/2-Wegeventils an den Eingang des Gehäuses über eine Druckzuführungsleitung angeschlossen und ist von dessen Steuerausgängen einer über eine Steuerleitung mit dem Stellzylinder des die Ventilspindel betätigenden Stellkolbens und ein anderer über eine Steuerleitung mit dem Steuerzylinder des Steuerkolbens des Verschlußstücks verbunden, wobei in einer Schaltstellung des 5/2-Wegeventils der Stellzylinder druckentlastet und der Steuerzylinder mit Druckmittel beaufschlagt, in der anderen Schaltstellung umgekehrt der Stellzylinder mit Druckmittel beaufschlagt und der Steuerzylinder druckentlastet ist.

Diese Ausführung hat den Vorteil, daß immer nur einer der beiden Kolben, die das Verschlußstück betätigen, also entweder der Stellkolben oder der Steuerkolben, druckbeaufschlagt ist, während der andere Kolben druckentlastet ist. In der einen Stellung des 5/2-Wegeventils, in der der Stellkolben druckbeaufschlagt und der Steuerkolben druckentlastet ist, erfolgt der langsame Druckaufbau der pneumatischen Anlage auf normale Weise, bis der Druck auf der Ausgangsseite des Startventils ausreichend hoch ist, um das Verschlußstück zur Gänze zu öffnen. Die zweite Stellung des 5/2-Wegeventils entspricht einer Notstopp-Schaltung. Dabei wird der Stellkolben druckentlastet und in der Folge der Druckentlastungsanschluß des Startventils geöffnet, wogegen das Verschlußstück des Startventils den Ventilsitz schließt, so daß kein Druckmedium nachfließen kann. Die pneumatische Anlage wird durch den Druckentlastungsanschluß rasch entlastet.

Weitere Einzelheiten und Vorteile der Erfindung ergeben sich aus der nachfolgenden Beschreibung von Ausführungsbeispielen, die in den Zeichnungen dargestellt sind. In diesen zeigt Fig. 1 einen axialen Mittelschnitt durch ein Ausführungsbeispiel eines erfindungsgemäßen Startventils, die Fig. 2 und 3 zeigen je eine erfindungsgemäße Schaltungsanordnung zum Steuern des Startventils in schematischer Darstellung.

In allen Ausführungsbeispielen ist das erfindungsgemäße Startventil mit 1 bezeichnet. Es besteht aus einem Ventilgehäuse 2, das aus mehreren Teilen zusammengesetzt sein kann und mit einem Eingang 3 und einem Ausgang 4 für das Druckmedium versehen ist. Der Eingang 3 steht mit einem Eingangsdruckraum 5 und der Ausgang 4 mit einem Ausgangsdruckraum 6 in Verbindung. Zwischen den beiden Druckräumen 5 und 6 ist eine Durchgangsöffnung mit einem Ventilsitz 7 vorgesehen, der durch ein Verschlußstück 8 gesteuert ist. Dieses ist durch eine Feder 9 in Schließrichtung belastet.

Das Verschlußstück 8 ist mit einer Stelleinrichtung 10 und einer Steuereinrichtung 11 versehen. Die Stelleinrichtung 10 besteht aus einem mit der Bewegungsrichtung des Verschlußstückes 8 fluchtenden Stellzylinder 12, in dem ein Stellkolben 13 abgedichtet geführt ist, der an einem Ende einen in den Ausgangsdruckraum 6 mündenden Ventilsitz 14 steuert und mit einer ihn durchsetzenden Ventilspindel 15 auf das Verschlußstück 8 des Ventilsitzes 7 wirkt. Die Ventilspindel 15 ist mit einem Gewinde 16 in den Stellkolben 13 eingeschraubt, wodurch dessen Abstand zum Verschlußstück 8 durch einfaches Verdrehen der Ventilspindel 15 eingestellt werden kann. Die Ventilspindel 15 ist an ihrem oberen Ende durch eine Ausnehmung 17 im Ventilgehäuse 2 zugänglich und mit einem Profil 18 zum Ansetzen eines Schraubenziehers oder eines anderen Werkzeuges versehen. Zum Zu- und Abführen des Druckmittels zum und vom Stellzylinder 12 ist eine Anschlußbohrung 19 vorgesehen.

Die am anderen Ende der Ventilspindel 15 vorgesehene Steuereinrichtung 11 besteht aus einem mit dem Verschlußstück 8 einstückig zusammengebauten Steuerkolben 20, der in einem mit dem Verschlußstück 8 fluchtenden Steuerzylinder 21 abgedichtet geführt ist. Für die Versorgung mit Druckmittel ist eine Anschlußbohrung 22 vorgesehen.

Der vom Stellkolben 13 gesteuerte Ventilsitz 14 führt vom Ausgangsdruckraum 6 über einen Entlastungskanal 23 zu einem Entlastungsanschluß 24. Die Stelleinrichtung 10 dient auf diese Weise auch zur schnellen Druckentlastung der Ausgangsseite 6 des Startventils und damit auch der angeschlossenen Anlage. Sie übt die Funktion eines Notstoppventils aus.

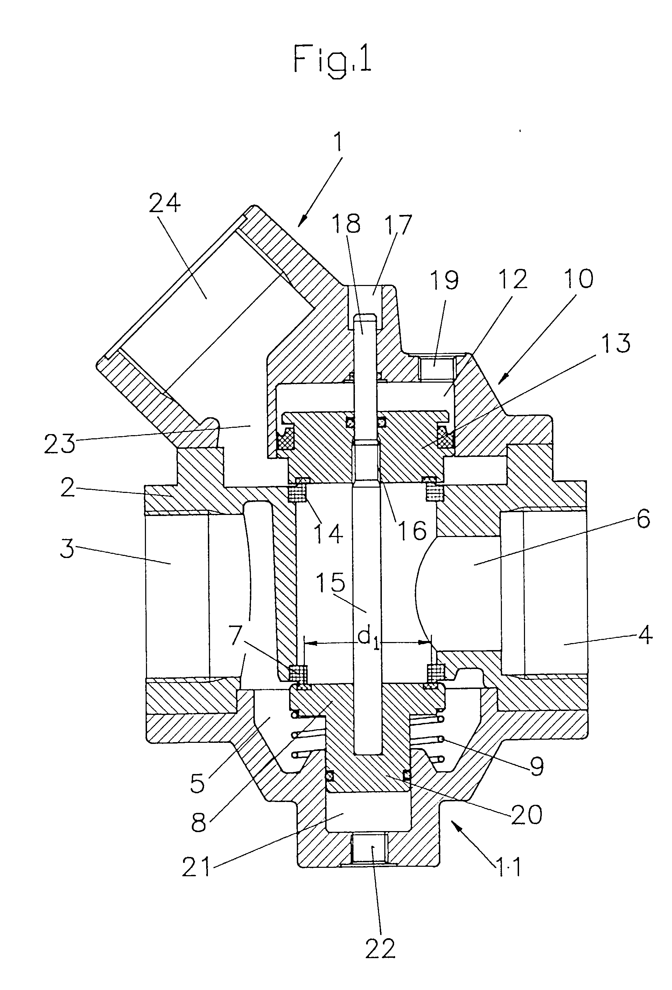

Aus der Zeichnung nach Fig. 1 ist zu entnehmen, daß der wirksame Durchmesser d₁ des Ventilsitzes 7 größer ist als der Durchmesser des Steuerzylinders 21, aber kleiner als der Durchmesser des Stellzylinders 12. Daraus ergibt sich, daß der wirksame Querschnitt des Steuerkolbens 20 kleiner ist als der wirksame Querschnitt des Ventilsitzes 7, und daß der wirksame Querschnitt des Ventilsitzes 7 kleiner ist als der wirksame Querschnitt des Stellkolbens 13.

Die Funktionsweise des Startventils nach Fig. 1 ist folgende:

In der Zeichnung ist das Startventil in der Stellung gezeigt, in der sich die Ventilteile befinden, wenn am Eingang 3 der volle Mediumsdruck ansteht, der Stellzylinder 12 durch die Anschlußbohrung 19 druckbeaufschlagt, der Steuerzylinder 21 dagegen durch die Anschlußbohrung 22 druckentlastet ist. Das Verschlußstück 8 wird dabei durch die Feder 9 und durch den Mediumsdruck im Eingangsdruckraum 5 zunächst an den Ventilsitz 7 angepreßt und verschließt diesen. Der Ausgang 4 und der Ausgangsdruckraum 6 sind drucklos. Die Ventilspindel 15, die mittels des Gewindes 16 im Stellkolben 13 eingeschraubt, im Steuerkolben 20 dagegen lediglich in Achsrichtung frei verschiebbar geführt ist, ist im Stellkolben 13 verhältnismäßig weit nach oben geschraubt, so daß das Verschlußstück 8 vom Ventilsitz 7 nicht abgehoben wird.

In dieser Stellung kann nun die Ventilspindel 15 durch ein auf das Profil 18 an ihrem oberen Ende aufgesetztes Werkzeug, z.B. durch einen Schraubenzieher, nach unten gegen das Verschlußstück 8 geschraubt werden, wobei es dieses vom Ventilsitz 7 abhebt. Dadurch entsteht ein offener Spalt zwischen dem Ventilsitz 7 und dem Verschlußstück 8, durch den das Druckmedium aus dem Eingangsdruckraum 5 in den Ausgangsdruckraum 6 gelangen kann. Der Spalt übt dabei eine Drosselwirkung aus. Dies hat zur Folge, daß die durch das Startventil betätigte pneumatische Anlage durch den Ausgang 4 hindurch nur langsam mit Druckmedium beaufschlagt wird. Die Geschwindigkeit des Druckaufbaus wird durch die Größe des Spaltes bestimmt, die durch mehr oder weniger weites Einschrauben der Ventilspindel 15 gegen das Verschlußstück 8 nach Bedarf eingestellt werden kann. Außerdem richtet sich die Geschwindigkeit des Druckanstieges im Ausgangsdruckraum 6 nach der Größe des Volumens, das dem Ausgang 4 nachgeschaltet ist.

Sobald der Druck im Ausgangsdruckraum 6 so weit angestiegen ist, daß die von ihm auf das Verschlußstück 8 ausgeübte Kraft die Kraft übersteigt, die von der Schließfeder 9 auf das Verschlußstück 8 und vom höheren Druck im Eingangsdruckraum 5 auf die den Steuerkolben 20 umgebende Ringfläche des Verschlußstückes 8 wirkt, öffnet das Verschlußstück 8 den Ventilsitz 7 zur Gänze, wobei es der Ventilspindel 15 entlang nach unten gleitet, bis der Steuerkolben 20 an einem Endanschlag anschlägt. Das Startventil ist dann zur Gänze geöffnet und es kann der volle Druck vom Eingang 3 durch das Startventil hindurch zum Ausgang 4 und von dort zur der angeschlossenen pneumatischen Anlage gelangen.

Die Größe des Druckes im Ausgangsdruckraum 6, die erforderlich ist, um das Verschlußstück 8 zu öffnen, hängt vom Verhältnis des Querschnittes des Ventilsitzes 7 zu der vom Eingangsdruck beaufschlagten, den Steuerkolben 20 umgebenden Ringfläche ab, praktisch also vom Durchmesser des Steuerkolbens 20, und kann durch konstruktive Bemessung dieser Größenverhältnisse nach Bedarf beeinflußt werden.

Die durch das Startventil betätigte Anlage kann beispielsweise dadurch abgeschaltet werden, daß der Steuerkolben 20 durch die Anschlußbohrung 22 mit Druckmittel beaufschlagt wird, das den am Eingang 3 herrschenden vollen Eingangsdruck aufweist. Der Steuerkolben 20 wird dadurch unter Mitwirkung der Feder 9 gegen den Ventilsitz 7 verschoben, bis er am Ende der Ventilspindel 15 anschlägt. Das Verschlußstück 8 schließt dabei den Ventilsitz 7 bis auf den beim Anfahren eingestellten Spalt, so daß die Druckmittelzufuhr vom Eingang 3 zum Ausgang 4 gedrosselt wird.

Der Stellzylinder 12 kann durch die Anschlußbohrung 19 hindurch druckentlastet werden, wobei er in der Zeichnung nach oben verschoben wird, den Druckentlastungssitz 14 öffnet und so eine Verbindung zwischen dem Ausgangsdruckraum 6 und dem Entlastungsanschluß 24 über den Entlastungskanal 23 herstellt. Die Ausgangsseite des Startventils und damit die angeschlossene pneumatische Anlage werden dadurch zur Gänze druckentlastet.

Das beschriebene Startventil bietet auch die Möglichkeit eines sogenannten Notstopps. Dieser kann dadurch eingeleitet werden, daß der Stellzylinder 12 druckentlastet wird, bevor der Steuerzylinder 21 und der darin verschiebbare Steuerkolben 20 mit Druckmittel beaufschlagt werden, also bei voll geöffnetem Verschlußstück 8. Der Stellkolben 13 wird dadurch nach oben verschoben und das Verschlußstück 8 schließt den Ventilsitz 7 ab. Dabei kommt es zu einer Schnellentlastung des Ausgangsdruckraumes 6 und der daran angeschlossenen Anlage durch den Entlastungskanal 23 und den Entlastungsanschluß 24 hindurch.

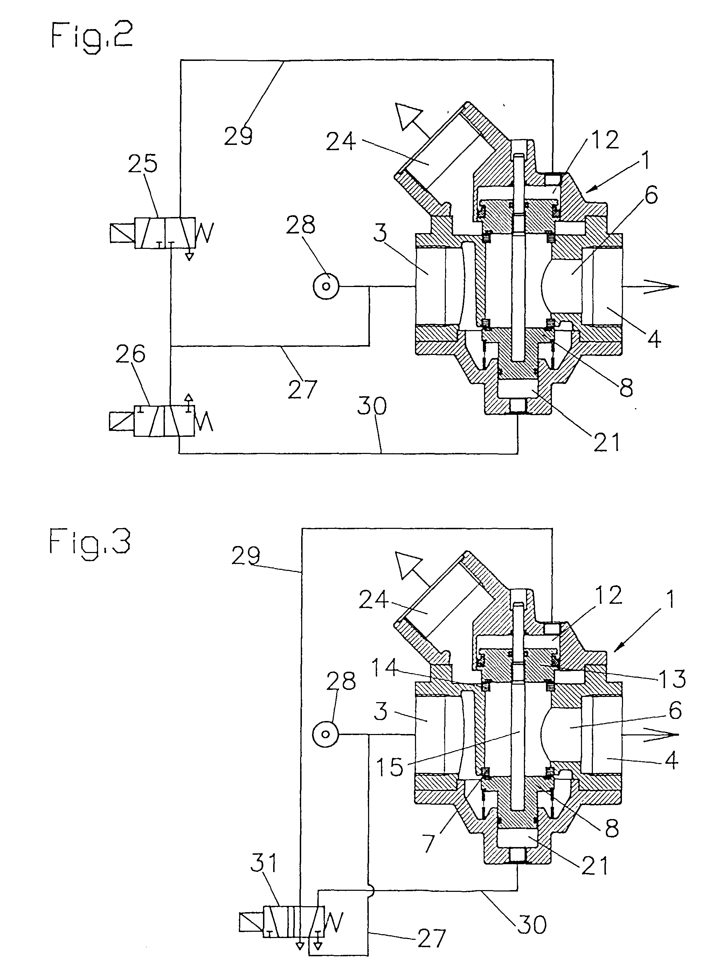

Die Fig. 2 und 3 zeigen zwei beispielsweise Schaltungsanordnungen, mit denen die beschriebene Funktionsweise des Startventils gesteuert werden kann. Gemäß Fig. 2 sind zwei 3/2-Wegeventile 25 und 26 vorgesehen, die die Zuführung und die Abführung des Druckmittels zum Stellzylinder 12 und zum Steuerzylinder 21 steuern. Beide 3/2-Wegeventile 25,26 sind über eine Druckzuführungsleitung 27 mit der schematisch angedeuteten Druckquelle 28 verbunden. Vom 3/2-Wegeventil 25 führt eine Steuerleitung 29 zum Stellzylinder 12 und eine Steuerleitung 30 verbindet das 3/2-Wegeventil 26 mit dem Steuerzylinder 21.

Die Funktion des Startventils 1 ist hier die gleiche wie sie anhand der Fig. 1 beschrieben wurde. Mit Hilfe der 3/2-Wegeventile 25,26 wird die Funktion gesteuert. Durch Umschalten des 3/2-Wegeventils 25 wird der Stellzylinder 12 mit Druckmittel beaufschlagt und auf diese Weise der langsame Druckaufbau eingeleitet. Wenn gleichzeitig damit auch das 3/2-Wegeventil 26 betätigt und dadurch der Steuerkolben 21 mit Druckmittel beaufschlagt wird, kann der im Ausgangsdruckraum 6 aufgebaute Steuerdruck das Verschlußstück 8 nicht öffnen, bis der Steuerzylinder 21 druckentlastet wurde. Dies kann durch neuerliches Umschalten des 3/2-Wegeventiles 26 erfolgen. Diese Funktionsweise kann daher zweckmäßig verwendet werden, wenn das Startventil 1 erst dann voll geöffnet werden soll, sobald ein Quittiersignal anzeigt, daß sich die betätigte pneumatische Anlage in der geeigneten Ausgangsposition befindet, also insbesondere die Stellglieder der Anlage sich in ihrer Ausgangslage befinden. Die Betätigung der 3/2-Wegeventile 25 und 26 kann entweder von Hand aus, aber auch elektrisch oder pneumatisch erfolgen.

Im Ausführungsbeispiel nach Fig. 3 ist eine Variante der Ausführung nach Fig. 2 dargestellt. Gemäß Fig. 3 ist anstelle von zwei 3/2-Wegeventilen ein einziges 5/2-Wegeventil vorgesehen, das über eine Druckzuführungsleitung 27 mit der schematisch angedeuteten Druckquelle 28 verbunden ist. Eine Steuerleitung 29 führt auch hier zum Stellzylinder 12 und eine Steuerleitung 30 verbindet das 5/2-Wegeventil 31 mit dem Steuerzylinder 21. Die Betätigung des 5/2-Wegeventils 31 kann auch hier von Hand aus, elektrisch oder pneumatisch erfolgen.

In der in Fig. 3 dargestellten Stellung ist der Stellzylinder 12 druckentlastet und der Steuerzylinder 21 von der Druckquelle 28 aus mit dem Eingangsdruck beaufschlagt. Das Verschlußstück 8 verschließt deshalb den Ventilsitz 7. Der Ausgang 4 samt Ausgangsdruckraum 6 ist daher durch den Entlastungsanschluß 24 hindurch druckentlastet.

Wenn das 5/2-Wegeventil 31 umgeschaltet wird, wird der Stellzylinder 12 mit Druckmittel beaufschlagt und der Steuerzylinder 21 wird druckentlastet. Wie schon anhand der Fig. 1 beschrieben wurde, verschließt der Stellkolben 13 bei Druckbeaufschlagung den Druckentlastungssitz 14 und hebt über die Ventilspindel 15 das Verschlußstück 8 vom Ventilsitz 7 ab, so daß der beschriebene kleine Ringspalt für den langsamen Druckaufbau geöffnet wird. Sobald sich der vorbestimmte Druck im Ausgangsdruckraum 6 aufgebaut hat, wird das Verschlußstück 8 zur Gänze geöffnet, wobei dann die an den Ausgang 4 angeschlossene pneumatische Anlage mit dem vollen Druck beaufschlagt wird. Das Abschalten der Anlage erfolgt durch neuerliche Betätigung des 5/2-Wegeventils 31, wobei der Steuerzylinder 21 druckbeaufschlagt und der Stellzylinder 12 druckentlastet wird. Das Startventil wird dabei durch das Verschlußstück 8 geschlossen und der Druckentlastungssitz 14 wird durch den Stellkolben 13 geöffnet, wodurch eine Druckentlastung der an den Ausgang 4 angeschlossenen Anlage durch den Entlastungsanschluß 24 hindurch erfolgt.

## Patentansprüche

1. Startventil für pneumatische Anlagen, z.B, zur Betätigung der Stellzylinder von Werkzeugen und Werkzeugautomaten, das ein Ventilgehäuse (2) mit je einem Eingang (3) und einem Ausgang (4) und mit diesen verbundenen Druckräumen (5,6) aufweist, zwischen denen eine Durchgangsöffnung mit einem Ventilsitz (7) vorgesehen ist, der durch ein Verschlußstück (8) gesteuert ist, das in Schließrichtung durch eine Feder (9) belastet und mit Hilfe einer Stelleinrichtung (10) gegen die Kraft der Feder vom Ventilsitz abhebbar ist, wobei die Stelleinrichtung einen in einem Stellzylinder (12) geführten Stellkolben (13) aufweist, der mit einer auf das Verschlußstück wirkenden Ventilspindel (15) verbunden und zum Abheben des Verschlußstückes (8) vom Ventilsitz (7) mit Druckmittel beaufschlagbar ist, wobei das Verschlußstück (8) durch den Stellkolben (13) über die Ventilspindel (15) nur in Schließrichtung beeinflußbar, in Öffnungsrichtung aber unabhängig vom Stellkolben (13) verschiebbar ist, **dadurch gekennzeichnet,** daß am Ventilgehäuse (2) ein Anschlag (14) für den Stellkolben (13) vorgesehen ist, der dessen Bewegung in Öffnungsrichtung des Verschlußstückes (8) begrenzt, wobei der vom Druckmittel beaufschlagte wirksame Querschnitt des Stellkolbens (13) größer ist als der wirksame Querschnitt des Ventilsitzes (7), daß das Verschlußstück (8) auf seiner dem Ventilsitz (7) abgewendeten Seite mit einem Steuerkolben (20) versehen ist, der in einem von den Druckräumen (5,6) des Ventilgehäuses (2) getrennten, mit einem eigenen Steueranschluß (22) ausgestatteten Steuerzylinder (21) geführt und in diesem vom Druckmittel in Schließrichtung des Verschlußstückes (8) beaufschlagbar ist, und daß der mit der Ventilspindel (15) verbundene Stellkolben (13) einen Druckentlastungssitz (14) steuert, der vom Druckraum (6) auf der Ausgangsseite (4) des Gehäuses (2) zu einem Entlüftungsanschluß (24) führt und den Anschlag für den Stellkolben (13) bildet.

2. Startventil nach Anspruch 1, dadurch gekennzeichnet, daß die Ventilspindel (15) mit dem Stellkolben (13) axial verstellbar verbunden ist, vorzugsweise durch eine Schraubverbindung (16).

3. Startventil nach Anspruch 1 oder 2, dadurch gekennzeichnet, daß der Steuerkolben (20) mit dem Verschlußstück (8) des Ventilsitzes (7) einstückig ausgebildet ist.

4. Startventil nach einem der Ansprüche 1 bis 3, dadurch gekennzeichnet, daß der druckbeaufschlagte wirksame Querschnitt des Steuerkolbens (20) 30 bis 70 %, vorzugsweise etwa die Hälfte, des Querschnittes des Ventilsitzes (7) beträgt.

5. Schaltungsanordnung bestehend aus einem Startventil nach einem der Ansprüche 1 bis 4 und zwei 3/2-Wegeventilen zur Steuerung des Startventils, bei der die Steuereingänge der 3/2-Wegeventile beide mit dem Eingang (3) des Gehäuses (2) und von deren Steuerausgängen jeweils einer des einen 3/2-Wegeventils (25) mit dem Stellzylinder (12) des die Ventilspindel (15) betätigenden Stellkolbens (13) und einer des anderen 3/2-Wegeventils (26) mit dem Steuerzylinder (21) des Steuerkolbens (20) des Verschlußstücks (8) über Leitungen (27,29,30) verbunden sind, wobei durch Betätigen der beiden 3/2-Wegeventile (25,26) der Stellzylinder (12) und der Steuerzylinder (21) wahlweise mit Druckmittel beaufschlagbar oder vom Druck entlastbar sind.

6. Schaltungsanordnung bestehend aus einem Startventil nach einem der Ansprüche 1 bis 4 und einem 5/2-Wegeventil zur Steuerung des Startventils, bei der der Steuereingang des 5/2-Wegeventils an den Eingang (3) des Gehäuses (2) über eine Druckzuführungsleitung (27) angeschlossen ist und von dessen Steuerausgängen einer über eine Steuerleitung (29) mit dem Stellzylinder (12) des die Ventilspindel (15) betätigenden Stellkolbens (13) und ein anderer über eine Steuerleitung (30) mit dem Steuerzylinder (21) des Steuerkolbens (20) des Verschlußstücks (8) verbunden ist, wobei in einer Schaltstellung des 5/2-Wegeventils (31) der Stellzylinder (12) druckentlastet und der Steuerzylinder (21) mit Druckmittel beaufschlagt, in der anderen Schaltstellung umgekehrt der Stellzylinder (12) mit Druckmittel beaufschlagt und der Steuerzylinder (21) druckentlastet ist.

## Claims

1. A starting valve for pneumatic systems, e.g. for actuating the adjusting cylinders of tools and tool automata, having a valve housing (2) with both an inlet (3) and an outlet (4) and with pressure spaces (5, 6) which are connected to these (3, 4) and between which there is provided a through opening with a valve seat (7) which is controlled by a closing piece (8) which is loaded in the closing direction by a spring (9) and which can - with the aid of an adjusting device (10) - be lifted from the valve seat against the force of the spring, the adjusting device having an adjusting piston (13) which is guided in an adjusting cylinder (12), is connected to a valve stem (15) acting upon the closing piece and can be acted upon by pressure medium in order to lift the closing piece (8) from the valve seat (7), the closing piece (8) being influenceable (15) by the adjusting piston (13) via the valve stem in the closing direction only, in the opening direction however being movable independently of the adjusting piston (13), characterised in that a stop (14) for the adjusting piston (13) is provided on the valve housing (2) and limits the movement of the adjusting piston (13) in the opening direction of the closing piece (8), the adjusting-piston effective cross-section acted upon by the pressure medium being larger than the effective cross-section of the valve seat (7), in that on its side remote from the valve seat (7), the closing piece (8) is provided with a control piston (20) which is guided in a control cylinder (21) - which is separate from the pressure spaces (5, 6) of the valve housing (2) and which is provided with its own control connection (22) - and which therein can be acted upon in the closing direction of the closing piece (8) by the pressure medium, and in that the adjusting piston (13) connected to the valve stem (15) controls a pressure relief seat (14) which runs from the pressure space (6) on the outlet side (4) of the housing (2) to a pressure release connection (24) and which forms the stop for the adjusting piston (13).

2. A starting valve in accordance with Claim 1, characterised in that the valve stem (15) is axially adjustably connected to the adjusting piston (13), preferably by a screw connection (16).

3. A starting valve in accordance with Claim 1 or 2, characterised in that the control piston (20) is integral with the closing piece (8) of the valve seat (7).

4. A starting valve in accordance with any one of Claims 1 to 3, characterised in that the effective cross-section, of the control piston (20), acted upon by pressure amounts to 30 to 70%, preferably about half, of the cross-section of the valve seat (7).

5. A switching arrangement consisting of a starting valve in accordance with any one of Claims 1 to 4 and two 3/2-port directional control valves for controlling the starting valve, in which arrangement, via lines (27, 29, 30), the control inlets of the 3/2-port directional control valves are both connected to the inlet (3) of the housing (2) and the control outlet of the one 3/2-port directional control valve (25) is connected to the adjusting cylinder (12) of the adjusting piston (13) which actuates the valve stem (15) and the control outlet of the other 3/2-port directional control valve (26) is connected to the control cylinder (21) of the control piston (20) of the closing piece (8), the adjusting cylinder (12) and the control cylinder (21) being able to be acted upon with pressure medium or relieved of pressure alternatively through actuation of the two 3/2-port directional control valves (25, 26).

6. A switching arrangement consisting of a starting valve in accordance with any one of Claims 1 to 4 and a 5/2-port directional control valve for controlling the starting valve, in which arrangement the control inlet of the 5/2-port directional control valve is connected to the inlet (3) of the housing (2) via a pressure supply line (27) and one control outlet is connected via a control line (29) to the adjusting cylinder (12) of the adjusting piston (13) which actuates the valve stem (15) and another control outlet is connected via a control line (30) to the control cylinder (21) of the control piston (20) of the closing piece (8), the adjusting cylinder (12) being relieved of pressure in one switching position of the 5/2-port directional control valve (31) and conversely the adjusting cylinder (12) being acted upon with pressure medium and the control cylinder (21) being relieved of pressure in the other switching position.

## Revendications

1. Soupape de mise en marche pour des installations pneumatiques, par exemple pour actionner les cylindres de positionnement d'outils et de machines-outils, qui comprend un boîtier de soupape (2) présentant une entrée (3) et une sortie (4) et des chambres de pression (5, 6) reliées à celles-ci, entre lesquelles est prévue une ouverture de passage comportant un siège de soupape (7) qui est commandé par un élément de fermeture (8) sollicité par un ressort (9) en direction de fermeture et susceptible d'être soulevé depuis le siège de soupape à l'encontre de la force du ressort à l'aide d'un dispositif de positionnement (10), le dispositif de positionnement comportant un piston de positionnement (13) guidé dans un cylindre de positionnement (12), ledit piston étant relié à une tige de soupape (15) agissant sur l'élément de fermeture et pouvant être attaqué avec un fluide sous pression pour soulever l'élément de fermeture (8) depuis le siège de soupape (7), l'élément de fermeture (8) étant déplaçable par le piston de positionnement (13) via la tige de soupape (15) uniquement en direction de fermeture, mais mobile en direction d'ouverture indépendamment du piston de positionnement (13), caractérisée en ce qu'il est prévu sur le boîtier de soupape (2) une butée (14) pour le piston de positionnement (13), laquelle limite son mouvement en direction d'ouverture de l'élément de fermeture (8), la section efficace du piston de positionnement (13) attaquée par le fluide sous pression étant supérieure à la section efficace du siège de soupape (7), en ce que l'élément de fermeture (8) est pourvu, sur son côté détourné du siège de soupape (7), d'un piston de commande (20) qui est guidé dans un cylindre de commande (21) séparé des chambres de pression (5, 6) du boîtier de soupape (2) et équipé d'un raccord de commande autonome (22) et qui peut être attaqué dans ledit cylindre par un fluide sous pression en direction de fermeture de l'élément de fermeture (8), et en ce que le piston de positionnement (13) relié à la tige de soupape (15) commande un siège de décharge de pression (14) qui mène depuis la chambre de pression (6) du côté sortie (4) du boîtier (2) jusqu'à un raccord de mise à l'air (24) et qui forme la butée pour le piston de positionnement (13).

2. Soupape de mise en marche selon la revendication 1, caractérisée en ce que la tige de soupape (15) est reliée en déplacement axial au piston de positionnement (13), de préférence par une liaison vissée (16).

3. Soupape de mise en marche selon l'une ou l'autre des revendications 1 et 2, caractérisée en ce que le piston de commande (20) est réalisé en une seule pièce avec l'élément de fermeture (8) du siège de soupape (7).

4. Soupape de mise en marche selon l'une quelconque des revendications 1 à 3, caractérisée en ce que la section efficace attaquée en pression du piston de commande (20) est de 30 à 70 %, de préférence environ la moitié de la section du siège de soupape (7).

5. Système de commutation constitué par une soupape de mise en marche selon l'une quelconque des revendications 1 à 4 et par deux soupapes 3 voies/2 positions pour commander la soupape de mise en marche, dans lequel les entrées de commande des soupapes 3 voies/2 positions sont reliées toutes les deux à l'entrée (3) du boîtier (2) et dont l'une des sorties de commande de l'une des soupapes 3 voies/2 positions (25) est reliée au cylindre de positionnement (12) du piston de positionnement (13) actionnant la tige de soupape (15) et dont une autre sortie de commande de l'autre soupape 3 voies/2 positions (26) est reliée au cylindre de commande (21) du piston de commande (20) de l'élément de fermeture (8) via des conduites (27, 29, 30), et en actionnant les deux soupapes 3 voies/2 positions (25, 26) le cylindre de positionnement (12) et le cylindre de commande (21) sont au choix susceptibles d'être alimentés ou déchargés de la pression par le fluide sous pression.

6. Système de commutation constitué par une soupape de mise en marche selon l'une quelconque des revendications 1 à 4 et par une soupape 5 voies/2 positions pour commander la soupape de mise en marche, dans lequel l'entrée de commande de la soupape 5 voies/2 positions est raccordée à l'entrée (3) du boîtier (2) via une conduite d'amenée de pression (27), et dont l'une des sorties de commande est reliée via une conduite de commande (29) au cylindre de positionnement (12) du piston de positionnement (13) actionnant la tige de soupape (15), et dont une autre sortie de commande est reliée via une conduite de commande (30) au cylindre de commande (21) du piston de commande (20) de l'élément de fermeture (8), et dans une position de commutation de la soupape 5 voies/2 positions (31) le cylindre de positionnement (12) est déchargé de la pression et le cylindre de commande (21) est attaqué par un fluide sous pression, et inversement dans l'autre position de commutation le cylindre de positionnement (12) est attaqué par le fluide sous pression et le cylindre de commande (21) est déchargé de la pression.
